# EUROPÄISCHE PATENTSCHRIFT

(11) **EP 1 149 960 B1**
(45) Veröffentlichungstag und Bekanntmachung des Hinweises auf die Patenterteilung: **20.10.2004**
(21) Anmeldenummer: 01108698.0
(22) Anmeldetag: 06.04.2001
(51) Int. Cl.: E04F 10/06, E06B 9/58, A01G 9/22

(54) **Beschattung für die Aussenseite eines Glasdaches**
Shadowing device for the exterior side of a glazed roof
Dispositif d'ombrage pour la face extérieure d'un toit vitré

(30) Priorität: 26.04.2000 DE 20007531 U
(43) Veröffentlichungstag der Anmeldung: 31.10.2001
(73) Patentinhaber: WEINOR Dieter Weiermann GmbH & Co., D-50829 Köln (DE)
(72) Erfinder: Stawski, Karl-Heinz, 50769 Köln-Merkenich (DE); Klatt, Alexander, 51109 Köln (DE)
(74) Vertreter: COHAUSZ DAWIDOWICZ HANNIG & PARTNER

(56) Entgegenhaltungen:
- WO-A-00/60192
- DE-A- 1 908 997
- GB-A- 448 634
- US-A- 5 564 234

## Beschreibung

Die Erfindung betrifft eine Beschattung für die Außenseite eines Glasdaches insbesondere eines Wintergartens mit einem auf einer Welle aufrollbaren Tuch, das über die Glasfläche gezogen wird.

Es sind Beschattungen für die Oberseite eines Glasdaches insbesondere eines Wintergartens mit einem Tuch bekannt, bei denen die Tuchwelle an der Außenseite insbesondere an der höchsten Stelle des Glasdaches sitzt, so dass das Tuch über die schräge Glasfläche nach unten gezogen wird, siehe beispeilsweise DE-A-1908997. Um die Tuchwelle aufnehmen zu können, ist im obersten Glasdachbereich ein Tuchwellenkasten erforderlich, der optisch unschön ist und einen Teil der oberen Glasfläche wegnimmt bzw. unnötig beschattet.

Aufgabe der Erfindung ist es, eine Beschattung der eingangs genannten Art so zu verbessern, dass die Glasflächen nicht verkleinert oder beschattet sind.

Diese Aufgabe wird erfindungsgemäß dadurch gelöst, dass die Tuchwelle innerhalb eines die Glasscheibe(n) tragenden Profils angeordnet ist.

Hierdurch sind die Tuchwelle und der Tuchwickel in einem Bereich des Glasdaches angeordnet, der genügend Platz hierfür bietet, ohne die Glasfläche des Daches zu verkleinern. Dies führt zu einem optisch besonders schönen und eleganten System. Es lässt sich insbesondere optimal bei Wintergärten-Dachsystemen verwenden. Stets sind die hierbei benötigten Profile von verhältnismäßig kleinen Außenabmessungen.

Vorzugsweise wird vorgeschlagen, dass das Profil einen Dachträger, einen Teil eines Dachträgers, eine senkrechte Außenstütze oder einen Teil einer senkrechten Außenstütze bildet.

Eine besonders einfache Konstruktion und Montage werden erreicht, wenn die Tuchwelle in einem profilförmigen Einsatz einliegt, der in einen zur Seite hin offenen Längshohlraum des Profils insbesondere formschlüssig einliegt. Hierbei kann der Einsatz einen Längshohlraum für die Tuchwelle bilden und der Längshohlraum zumindest an einem Ende durch eine Wand verschlossen sein, in der die Welle gelagert ist. Eine solche Wand ist in axialer Richtung verschieblich, so dass auf einfachste Weise eine exakte Lage der Wellenlagerung geschaffen wird. Hierbei ist von Vorteil, wenn die Wand im Endbereich des Längshohlraums des Einsatzes formschlüssig einliegt.

Vorzugsweise wird vorgeschagen, dass das Profil als Teil des Dachträgers oder der Außenstütze gegenüber dem Dachträger oder der Außenstütze um einen Winkel verschwenkbar ist, dessen Drehpunkt an der Innenseite oder Unterseite des Trägers oder der Stütze liegt. Hierdurch sind auf konstruktiv einfache Weise auch komplizierte Gebäudeformen aufbaubar. Dabei kann der zwischen Profil und Träger oder Stütze befindliche Zwischenraum außen durch ein Abdeckblech geschlossen und durch Wärmedämmmaterial ausgefüllt sein.

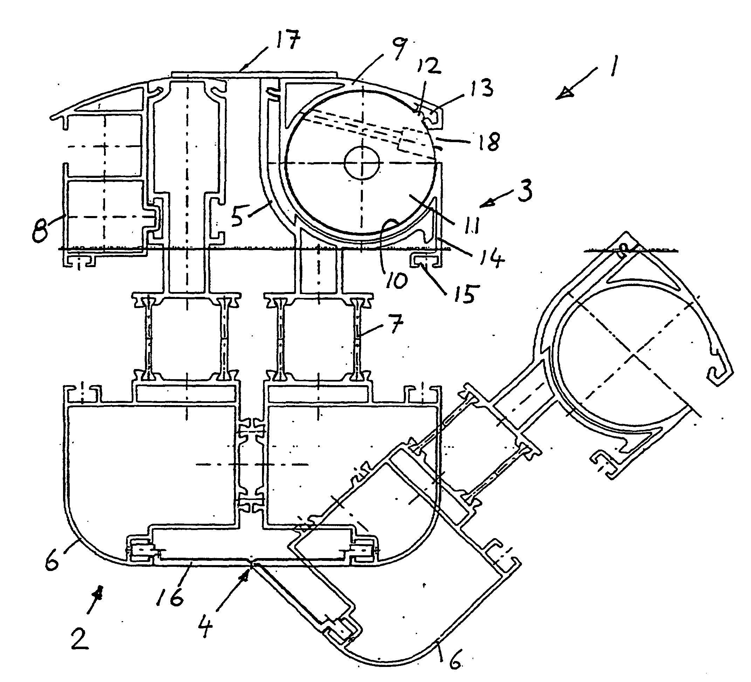

Ein Ausführungsbeispiel der Erfindung ist in der Zeichnung in einem Querschnitt dargestellt und wird im folgenden näher beschrieben.

Die obere Fläche eines Glasdaches insbesondere eines Wintergartens weist geneigte Sparren 1 auf, die die dazwischen liegenden Glasscheiben tragen.

Der Sparren ist aus zwei nebeneinander liegenden Halbprofilen 2, 3 zusammengesetzt, die gegeneinander um eine untere Drehstelle 4 verschwenkbar sind. In der Zeichnung ist das rechte Halbprofil 3 gegenüber dem linken Halbprofil 2 in zwei unterschiedlichen Stellungen dargestellt. Hierdurch können die Glasscheiben zueinander schräg angeordnet sein.

Jedes Halbprofil 2, 3 weist ein oberes Profil 5 und ein unteres Profil 6 auf, die durch thermische Trennungen 7 miteinander verbunden sind. Zwischen diesen beiden Profilen 5 und 6 liegt die Glasscheibe ein. Hierzu kann oberhalb des Profils 3 und seitlich am Profil 5 ein Glasclipprofil 8 einrastend befestigt sein.

Statt des Profils 8 kann das obere Profil 5 eine nach oben und zur Seite offene Rinne bilden, in der ein Tuchwelleneinsatz 9 formschlüssig einliegt, der einen zylindrischen Hohlraum 10 bildet. Der Hohlraum 10 ist nach beiden Seiten offen und durch eine kreisrunde scheibenförmige Wand 11 verschließbar, die als Tuchwellenlagereinsatz die Tuchwelle trägt und in axialer Richtung verschieblich und verstellbar ist. Hierbei weist die Wand an ihrem Umfang eine vorspringende Nase 12 auf, die in einer Längsausnehmung 13 des zylindrischen Hohlraums 10 einliegt. Hierdurch wird die Wand 11 an einem Drehen gehindert.

Der zylindrische Hohlraum 10 ist in seinem Durchmesser so groß gewählt, dass die Tuchwelle zusammen mit dem Tuchwellenwickel aufnehmbar ist. Seitlich weist der Tuchwelleneinsatz 9 eine Längsöffnung 18 auf, durch die das Tuch hindurchtreten kann.

An der Außenseite des Tuchwelleneinsatzes 9 ist eine nach unten ragende Wand 14 angeformt, die in einer nach unten offenen U-Rinne 15 endet, welche eine Abdichtung für die Glasscheibe aufnimt.

Die zwei unteren Profile 6 sind an ihrer Unterseite durch ein Abdeckblech 16 miteinander verbunden, das bei einem Verschwenken eines Halbprofils 3 gegenüber dem unteren Halbprofil 2 entsprechend abgebogen wird. An der Oberseite sind die zwei Halbprofile 2, 3 durch ein weiteres Abdeckblech 17 überdeckt.

In zeichnerisch nicht dargestellten Ausführungen wird die Beschattung und damit das Beschattungselement von einer Rollade oder waagerechten Lamellen gebildet, die über die Glasfläche außen gezogen wird (werden).

## Patentansprüche

1. Beschattung für die Außenseite eines Glasdaches insbesondere eines Wintergartens mit einem auf einer Welle aufrollbaren Tuch, das über die Glasfläche gezogen wird, **dadurch gekennzeichnet, dass** die Tuchwelle innerhalb eines die Glasscheibe(n) tragenden Profils (5) angeordnet ist.

2. Beschattung nach Anspruch 1, **dadurch gekennzeichnet, dass** das Profil (5) einen Dachträger, einen Teil eines Dachträgers (1), eine senkrechte Außenstütze oder einen Teil einer senkrechten Außenstütze bildet.

3. Beschattung nach Anspruch 1 oder 2, **dadurch gekennzeichnet, dass** die Tuchwelle in einem profilförmigen Einsatz (9) einliegt, der in einen zur Seite hin offenen Längshohlraum des Profils (5) insbesondere formschlüssig einliegt.

4. Beschattung nach Anspruch 2, **dadurch gekennzeichnet, dass** der Einsatz (9) einen Längshohlraum (10) für die Tuchwelle bildet und der Längshohlraum zumindest an einem Ende durch eine Wand (11) verschlossen ist, in der die Welle gelagert ist.

5. Beschattung nach Anspruch 4, **dadurch gekennzeichnet, dass** die Wand (11) im Endbereich des Längshohlraums des Einsatzes (9) formschlüssig einliegt.

6. Beschattung nach Anspruch 4 oder 5, **dadurch gekennzeichnet, dass** die Wand (11) in axialer Richtung der Welle verschieblich verstellbar ist.

7. Beschattung nach einem der vorherigen Ansprüche, **dadurch gekennzeichnet, dass** das Profil (5) als Teil des Dachträgers (1) oder der Außenstütze gegenüber dem Dachträger oder der Außenstütze um einen Winkel verschwenkbar ist, dessen Drehpunkt an der Innenseite oder Unterseite des Trägers (1) oder der Stütze liegt.

8. Beschattung nach Anspruch 7 oder 8, **dadurch gekennzeichnet, dass** der zwischen Profil (5) und Träger (1) oder Stütze (3) befindliche Zwischenraum außen durch ein Abdeckblech (17) geschlossen und durch Wärmedämmmaterial ausgefüllt ist.

9. Beschattung nach Anspruch 7 oder 8, **dadurch gekennzeichnet, dass** an der Unterseite des Trägers (1) ein Blech befestigt ist, das für ein Verschwenken die Schwenkachse bildet.

## Claims

1. Shadowing device for the outside of a glazed roof, in particular of a conservatory, comprising a fabric which is rolled up on a shaft and pulled over the glass surface, **characterised in that** the fabric shaft is arranged within a profile which supports the glass panes.

2. Shadowing device according to Claim 1, **characterised in that** the profile (5) establishes a roof support, part of a roof support (1), a vertical outside support or a part of a vertical outside support.

3. Shadowing device according to Claim 1 or 2, **characterised in that** the fabric shaft is seated in a profiled insert (9) which is positively inserted, in particular in an open longitudinal hollow space of the profile (5) which is open towards the side.

4. Shadowing device according to Claim 2, **characterised in that** the insert (9) establishes a longitudinal hollow space (10) for the fabric shaft, and the longitudinal hollow space is at least at one end sealed by a wall (11) in which the shaft is mounted.

5. Shadowing device according to Claim 4, **characterised in that** the wall is positively seated in the end area of the longitudinal hollow space of the insert (9).

6. Shadowing device according to Claim 4 or 5, **characterised in that** the wall (11) is adjustably displaceable in the axial direction of the shaft.

7. Shadowing device according to one of the above claims, **characterised in that** the profile (5) as part of the roof support (1) or of the external support is pivotal relative to the roof support or the exterior support by an angle the rotary point of which lies on the inside or bottom side of the support (1) or the support.

8. Shadowing device according to Claim 7 or 8, **characterised in that** the intermediate space between profile (5) and support (1) or support (3) is externally sealed by a cover sheet (17) and filled with heat absorbing material.

9. Shadowing device according to Claim 7 or 8, **characterised in that** on the bottom side of the support (1) is mounted a metal sheet which forms a pivotal axis for pivotal movement.

## Revendications

1. Dispositif d'ombrage pour la face extérieure d'un toit vitré, en particulier d'un jardin d'hiver, avec une toile pouvant être enroulée sur un arbre qui est tirée au-dessus de la surface vitrée,
**caractérisé par le fait que** l'arbre de toile est disposé à l'intérieur d'un profilé (5) portant la (les) vitre (s).

2. Dispositif d'ombrage selon la revendication 1,
**caractérisé par le fait que** le profilé (5) forme un support de toit, une partie de support de toit (1), un poteau extérieur vertical ou une partie d'un poteau extérieur vertical.

3. Dispositif d'ombrage selon la revendication 1 ou 2,
**caractérisé par le fait que** l'arbre de toile est logé dans un insert (9) en forme de profilé qui est logé, en particulier à fermeture géométrique, dans un volume creux longitudinal, ouvert en direction du côté, du profilé (5).

4. Dispositif d'ombrage selon la revendication 3,
**caractérisé par le fait que** l'insert (9) forme un volume creux longitudinal (10) pour l'arbre de toile et le volume creux longitudinal est fermé au moins à une extrémité par une paroi (11) dans laquelle l'arbre est monté.

5. Dispositif d'ombrage selon la revendication 4,
**caractérisé par le fait que** la paroi (11) est logée à fermeture géométrique dans la zone d'extrémité du volume creux longitudinal de l'insert (9).

6. Dispositif d'ombrage selon la revendication 4 ou 5,
**caractérisé par le fait que** la paroi (11) est mobile à coulissement en direction axiale de l'arbre.

7. Dispositif d'ombrage selon l'une des revendications précédentes,
**caractérisé par le fait que** le profilé (5) peut pivoter en tant que partie du support de toit (1) ou du poteau extérieur par rapport au support de toit ou au poteau extérieur d'un certain angle dont le centre de rotation se trouve sur le côté intérieur ou le côté inférieur du support (1) ou du poteau.

8. Dispositif d'ombrage selon la revendication 7 ou 8,
**caractérisé par le fait que** le volume intérieur se trouvant entre le profilé (5) et le support (1) ou le poteau est fermé extérieurement par une tôle de recouvrement (17) et rempli par un matériau isolant de la chaleur.

9. Dispositif d'ombrage selon la revendication 7 ou 8,
**caractérisé par le fait qu'**une tôle, qui forme l'axe de pivotement pour un pivotement, est fixée au côté inférieur du support (1).
